# EUROPÄISCHE PATENTSCHRIFT

(11) **EP 0 750 082 B1**
(45) Veröffentlichungstag und Bekanntmachung des Hinweises auf die Patenterteilung: **17.10.2001**
(21) Anmeldenummer: 96810295.4
(22) Anmeldetag: 09.05.1996
(51) Int. Cl.: E04G 21/14, F16B 13/08

(54) **Vorrichtung zur oberflächennahen Verankerung von Bauteilen**
Device for anchoring building elements close to a surface
Dispositif d'ancrage d'éléments de construction entre une surface

(30) Priorität: 22.06.1995 DE 19522618
(43) Veröffentlichungstag der Anmeldung: 27.12.1996
(73) Patentinhaber: HILTI Aktiengesellschaft, 9494 Schaan (LI)
(72) Erfinder: Obermeier, Josef, 86971 Peiting (DE)
(74) Vertreter: Wildi, Roland

(56) Entgegenhaltungen:
- EP-A- 0 116 161
- DE-A- 2 803 709
- DE-A- 2 911 224
- DE-A- 3 302 701
- DE-U- 9 216 965
- US-A- 2 563 164

## Beschreibung

Die Erfindung betrifft eine Vorrichtung zur oberflächennahen Verankerung von Bauteilen in, insbesondere armierten, Verankerungsgründen gemäss dem gattungsbildenden Oberbegriff des Patentanspruches 1.

Eine Vorrichtung zur oberflächennahen Verankerung der genannten Art ist beispielsweise aus der DE-A1-4315635 bekannt, die in eine ringförmige Schlitzbohrung eines Untergrundes verankerbar ist. Die Schlitzbohrung ist zur Aufnahme eines hohlzylindrisch ausgebildeten Verankerungsteils ausgebildet. Ferner weist das Verankerungsteil einen damit verbundenen Lastangriffsteil auf. Zur Verspreizung der Vorrichtung weist diese einen Innenkonus auf.

Nachteilig an dieser Vorrichtung ist, dass nicht in jedem Fall genügende hoher Haltewerte, insbesondere in sicherheitsrelevanten Bereichen, gewährleistet sind. Ferner stellt sich bei dieser bekannten Lösung das Problem, insbesondere bei hoher Armierungsdichte, dass beispielsweise beim Setzvorgang Armierungen durchtrennt werden müssen.

Für Verankerungen in sicherheitsrelevanten Bereichen werden Verankerungselemente in der Regel mit relativ grossen Setztiefen von 90 mm und mehr eingesetzt und im Verankerungsgrund verankert. Je nach Beschaffenheit des Verankerungsgrundes kann es bei der Erstellung der dafür erforderlichen tiefen Aufnahmebohrungen zu Schwierigkeiten kommen. Insbesondere bei armierten Verankerungsgründen, beispielsweise bei armiertem Beton mit hoher Armierungsdichte, kann es dabei zu Armierungstreffem kommen. Da es nicht erwünscht ist, Armierungen im Verankerungsgrund zu durchtrennen, wird in der Regel bei Armierungstreffem an anderer Stelle nachgebohrt, um dort den Befestigungspunkt zu setzen. Vielfach ist es aber nicht möglich, den gewünschten Befestigungspunkt zu verschieben oder ganz auf den Befestigungspunkt zu verzichten, um dem Armierungseisen auszuweichen. Daher muss in derartigen Fällen die Armierung durchtrennt werden.

Abgesehen davon, dass es unerwünscht und in sicherheitsrelevanten Anwendungen oft auch nicht ratsam ist, Armierungen zu durchtrennen, ist die Fertigstellung der Aufnahmebohrung bei Armierungstreffem nur mit grossem Auwand durchführbar. Da bei Armierungstreffem die Bohrleistung mit konventionellen Bohrwerkzeugen sehr stark nachlässt, müssen in derartigen Fällen spezielle Werkzeuge, beispielsweise diamantbesetzte Bohrwerkzeuge, eingesetzt werden. Dies vergrössert den Aufwand für die Erstellung eines Befestigungspunktes nicht unerheblich. Zudem kann es erforderlich sein, den Verankerungsgrund im Bereich der durchtrennten Armierung zusätzlich zu unterstützen, um ihm wieder die geforderte Festigkeit zu verleihen. Falls dieser zusätzliche Aufwand nicht betrieben werden soll, kann es erforderlich sein, die Belastungswerte des Verankerungsgrundes im Bereich der durchtrennten Armierung zu reduzieren.

Aufgabe der vorliegenden Erfindung ist es daher, eine Vorrichtung zu schaffen, welche es erlaubt, auch in armierten Verankerungsgründen Befestigungspunkte zu setzen, ohne dabei Armierungen durchtrennen zu müssen. Die Vorrichtung soll es erlauben, auch bei Armierungstreffem die gewünschten Befestigungspunkte beizubehalten. Es soll eine Vorrichtung geschaffen werden, welche auch in sicherheitsrelevanten Bereichen einsetzbar ist und Verankerungen mit ausreichend hohen Haltewerten ermöglicht. Aufwendige nachträgliche Sanierungen des Verankerungsgrundes zur Wiederherstellung seiner Festigkeit sollen vermieden werden können.

Die Lösung dieser Aufgaben besteht in einer Vorrichtung mit den im Patentanspruch 1 angeführten Merkmalen.

Die innere Hülse der erfindungsgemässen Vorrichtung wird in eine ringförmige Schlitzbohrung im Verankerungsgrund eingesetzt, welche zuvor beispielsweise mittels einer Hammerbohrkrone oder mit einer Kernbohrkrone erstellt wurde. Die Verankerung erfolgt durch Überstülpen der äusseren Hülse über die innere Hülse und Eintreiben der äusseren Hülse in die ringförmige Schlitzbohrung. Die Wandstärken der beiden Hülsen sind derart bemessen, dass ihre Summe gegenüber der Schlitzbreite der Schlitzbohrung ein Übermass aufweist. Auf diese Weise wirkt beispielsweise die innere Hülse wie eine Spreizhülse und presst die Aussenwandung der mit axialen Schlitzen versehenen äusseren Hülse gegen die Aussenwandung der Schlitzbohrung. Die Innenwandung der inneren Hülse kann ebenfalls geschlitzt sein und presst dann gegen die Aussenwandung der Schlitzbohrung. Die Verankerung erfolgt durch Reibschluss der äusseren und gegebenenfalls der inneren Begrenzungsflächen des Verankerungsteiles an den inneren und äusseren umlaufenden Begrenzungswandungen der ringförmigen Schlitzbohrung. Dadurch ist die Verankerungsfläche gegenüber konventionellen Ankem deutlich grösser. Bei inneren und äusseren Hülsen, die beide mit axialen Schlitzen versehen sind, wird die Verankerungsflächen nahezu verdoppelt. Durch die grosse Verankerungsfläche kann die Tiefe der ringförmigen Schlitzbohrung gegenüber konventionellen Aufnahmebohrungen geringer gehalten werden, ohne dadurch die Haltewerte zu beeinträchtigen. Dadurch kann der Befestigungspunkt in oberflächennahe Bereiche gesetzt werden, in denen sich keine Armierungen befinden. Auf diese Weise können Befestigungspunkte auch noch in Bereichen gesetzt werden, in denen eine zuvor erstellte konventionelle Aufnahmebohrung zu einem Armierungstreffer geführt hat und ein konventioneller Anker nur nach vorherigem Durchtrennen der Armierung gesetzt werden könnte.

Die erfindungsgemässe Vorrichtung erlaubt es, auch in Verankerungsgründen mit hoher Armierungsdichte an beliebigen Stellen Befestigungspunkte mit ausreichenden Haltewerten zu erstellen. Armierungstreffer bei der Erstellung von Aufnahmebohrungen für konventionelle Anker führen nicht dazu, dass der Befestigungspunkt verschoben oder die Armierung durchtrennt werden muss. Durch den Einsatz der erfindungsgemässen Vorrichtung können die gewünschten Befestigungspunkte auch bei Armierungstreffem noch gesetzt werden, ohne dass Armierungen durchtrennt werden müssten. Eine nachträgliche Verstärkung des Verankerungsgrundes ist daher nicht mehr erforderlich. Die Festigkeit des Verankerungsgrundes bleibt erhalten und die zulässige Belastung des Untergrundes muss nicht reduziert werden.

Für die erzielbaren Lastwerte der Verankerung ist es von Vorteil, wenn die innere und die äussere Hülse über ihre Länge jeweils Wandstärken aufweisen, welche sich im ineinandergeschobenen Zustand der beiden Hülsen derart ergänzen, dass das Verankerungsteil über seine Länge eine im wesentlichen konstante Gesamtwandstärke aufweist. Dadurch ist sichergestellt, dass die Innenwandung der inneren Hülse und die Aussenwandung der äusseren Hülse im wesentlichen über ihre gesamte Länge an den Begrenzungswandungen der ringförmigen Schlitzbohrung anliegen.

Der Reibschluss zwischen dem Verankerungsteil der erfindungsgemässen Vorrichtung und den Begrenzungswandungen der ringförmigen Schlitzbohrung kann durch einen Formschluss unterstützt werden, indem die Innenwandung der inneren Hülse im Bereich ihres setzrichtungsseitig vorderen Endes mit radialen Vorsprüngen versehen ist. Beim Vortreiben der äusseren Hülse in Setzrichtung werden die Vorsprünge in den Verankerungsgrund gepresst und erzeugen dort bereichsweise eine Hinterschneidung.

Es ist vorteilhaft, wenn die radialen Vorsprünge derart angeordnet sind, dass sie an der Innenwandung der inneren Hülse wenigstens einen umlaufenden Ringwulst mit Schneide bilden. Die Schneide des Ringwulstes gräbt sich in den Verankerungsgrund und erzeugt die Hinterschneidung und den erwünschten zusätzlichen Formschluss.

Um zu vermeiden, dass die äussere Hülse zu weit in die Schlitzbohrung vorgetrieben wird und durch übermässigen Spreizdruck der Verankerungsgrund im Bereich der Schlitzbohrung beschädigt wird, ist es von Vorteil, wenn die äussere Hülse an ihrem dem setzrichtungsseitig vorderen Ende gegenüberliegenden Ende mit einem umlaufenden Kragen oder dergleichen Anschlagelementen ausgestattet ist.

In einer vorteilhaften Ausführungsvariante der erfindungsgemässen Vorrichtung ist das Lastangriffsteil mit der inneren Hülse verbunden. Dabei weist die innere Hülse mit dem damit verbundenen Lastangriffsteil bevorzugt eine topfartige Gestalt auf. Der den Topfboden bildende Verbindungsbereich, welcher das Verankerungsteil und das Lastangriffsteil miteinander verbindet, erfüllt die Funktion eines Tiefenanschlages und stützt die innere Hülse an der Oberfläche des Verankerungsgrundes ab. Dadurch bleibt die Setztiefe der inneren Hülse auch bei einer zu tief erstellten Schlitzbohrung konstant. Das Lastangriffsteil ist zentrisch angeordnet und ragt axial von dem Verbindungsbereich ab. Auf diese Weise kommt es zu einer gleichmässigen Krafteinleitung bei Belastung der Verankerung, was sich günstig auf die erzielbaren Haltewerte auswirkt.

Im folgenden wird die Erfindung unter Bezugnahme auf ein in den Zeichnungen dargestelltes Ausführungsbeispiel näher erläutert. Es zeigen:
- Fig. 1: einen Axialschnitt einer erfindungsgemässen Vorrichtung im gesetzten Zustand;
- Fig. 2: einen Axialschnitt einer Aufnahmebohrung mit Armierungstreffer; und
- Fig. 3: einen Axialschnitt eines Befestigungspunktes über der Aufnahmebohrung gemäss Fig. 2 mittels einer erfindungsgemässen Vorrichtung.

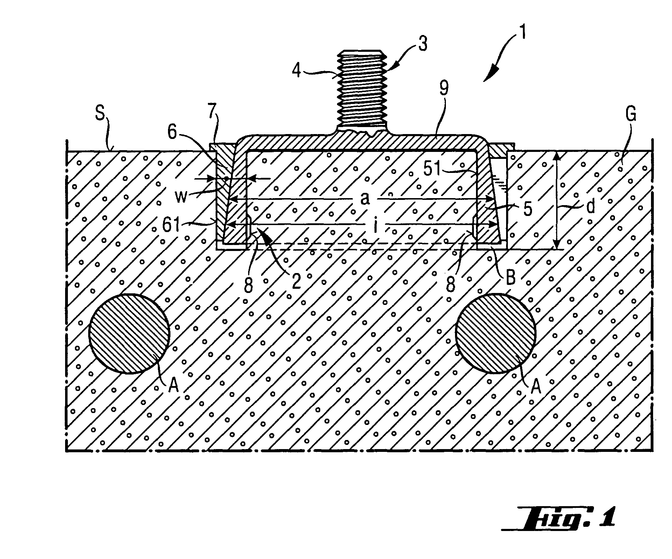

Ein Ausführungsbeispiel der erfindungsgmässen Vorrichtung zur oberflächennahen Verankerung von Bauteilen in, vorzugsweise armiertem, Verankerungsgrund, beispielsweise in Beton mit hoher Armierungsdichte ist in Fig. 1 gesamthaft mit dem Bezugszeichen 1 versehen. Die Verankerungsvorrichtung 1 weist ein hohlzylindrisches Verankerungsteil 2 und ein Lastangriffsteil 3 auf. Das Lastangriffsteil 3 kann, wie beispielsweise dargestellt, durch eine Ankerstange mit einem Aussengewinde 4 gebildet sein. Anstelle einer Ankerstange mit Aussengewinde kann aber auch eine Hülse mit Innengewinde oder dergleichen Einrichtung vorgesehen sein.

Das Verankerungsteil 2 umfasst zwei im wesentlichen hohlzylindrische Hülsen, eine innere Hülse 5 mit einem Aussendurchmesser a und eine äussere Hülse 6 mit einem Innendurchmesser i, welche kegelartig ineinander schiebbar sind. Im ineinandergeschobenen Zustand der beiden Hülsen 5, 6 ist der Innnendurchmesser i der äusseren Hülse 6 im wesentlichen gleich oder nur geringfügig grösser als der Aussendurchmesser a der inneren Hülse 5. Die innere und die äussere Hülse 5 bzw. 6 sind derart ausgebildet, dass sich ihre einander zugekehrten Innen- bzw. Aussendurchmesser i bzw. a zu ihren in Setzrichtung vorderen Enden hin vergrössem. Entsprechend nimmt die Wandstärke der inneren Hülse 5 in Richtung ihres vorderen freien Endes zu und die Wandstärke der äusseren Hülse 6 in korrespondierender Weise ab. Dabei sind die Wandstärken der inneren und der äusseren Hülsen 5 bzw. 6 derart aufeinander abgestimmt, dass im ineinandergeschobenen Zustand der Hülsen 5, 6 das Verankerungsteil 2 über seine gesamte Länge eine im wesentlichen konstante Gesamtwandstärke w aufweist. Die äussere Hülse 6 und gegebenenfalls auch die innere Hülse 5 sind mit in den Schnittdarstellungen nicht gezeigten axialen Schlitzen versehen, die ein radiales Aufweiten der Hülsen erleichtem.

Für die Erstellung eines Befestigungspunktes wird die innere Hülse 5 der erfindungsgemässen Verankerungsvorrichtung 1 in eine ringförmige Schlitzbohrung B im Verankerungsgrund G eingesetzt, welche zuvor beispielsweise mittels einer Hammerbohrkrone oder mit einer Kernbohrkrone erstellt wurde. Die Verankerung der Verankerungsvorrichtung 1 in der Schlitzbohrung B erfolgt Überstülpen der äusseren Hülse 6 über die innere Hülse 5 und Eintreiben der äusseren Hülse 6 in den verbleibenden Ringspalt der ringförmigen Schlitzbohrung B. Die Wandstärken der beiden Hülsen sind derart bemessen, dass ihre Summe gegenüber der Breite der Schlitzbohrung B ein Übermass aufweist. Auf diese Weise wirkt die eingetriebene äussere Hülse 6 wie eine Spreizhülse und presst die Innenwandung 51 der inneren Hülse 5 gegen die Innenwandung der Schlitzbohrung B. Die Aussenwandung 61 der äusseren Hülse 6 presst gegen die Aussenwandung der ringförmigen Schlitzbohrung B. Die Verankerung erfolgt durch Reibschluss der äusseren und inneren Begrenzungsflächen 51, 61 des Verankerungsteiles 2 an den inneren und äusseren umlaufenden Begrenzungswandungen der ringförmigen Schlitzbohrung B. Dadurch wird die Verankerungsfläche gegenüber konventionellen Ankem gleicher Setztiefe nahezu verdoppelt. Durch die grosse Verankerungsfläche kann die Tiefe d der ringförmigen Schlitzbohrung B gegenüber konventionellen Aufnahmebohrungen geringer gehalten werden, ohne dadurch die Haltewerte zu beeinträchtigen. Dadurch kann der Befestigungspunkt in oberflächennahe Bereiche gesetzt werden, in denen sich keine Armierungen A befinden.

Die äussere Hülse 6 kann, wie in Fig. 1 dargestellt, einen umlaufenden Kragen 7 aufweisen, der als Tiefenanschlag an der Oberfläche S des Verankerungsgrundes G dient. Dadurch ist sichergestellt, dass die äussere Hülse 6 auch bei zu tief erstellter ringförmiger Schlitzbohrung B nicht zu tief eingetrieben wird und dadurch eine überhöhte Spreizkraft auf die Wandungen der Schlitzbohrung ausgeübt wird, welche zu einer Beschädigung des Verankerungsgrundes G führen könnte. Der umlaufende Kragen 7 kann auch als Hilfe für das Eintreiben der äusseren Hülse 6 in die ringförmige Schlitzbohrung B dienen, indem ein Setzwerkzeug, das mit axialen Schlägen beaufschlagbar ist, daran angesetzt werden kann.

An der Innenwandung 51 der inneren Hülse 5 können im Bereich ihres vorderen Endes Vorsprünge 8 angeordnet sein, welche bei der Verspreizung eine Hinterschneidung in der Schlitzbohrung erzeugen und die reibschlüssige Verankerung durch einen zusätzlichen Formschluss unterstützen. In einer vorteilhaften Ausführungsvariante sind die Vorsprünge 8 derart an der Innenwandung 51 der inneren Hülse 5 angeordnet, dass sie wenigstens einen umlaufenden Ringwulst mit einer umlaufenden Schneide bilden.

Die Verspreizbarkeit der inneren und der äusseren Hülsen 5, 6 in der ringförmigen Schlitzbohrung B kann noch dadurch erleichtert werden, dass die innere oder die äussere Hülse oder beide Hülsen 5, 6 mit wenigstens einem axialen Schlitz versehen sind, der sich wenigstens über einen Teil ihrer Länge erstreckt.

Das Lastangriffsteil 3 kann mit der inneren oder der äusseren Hülse 5 bzw. 6 verbunden sein. Bevorzugt ist es, wie dargestellt, mit der inneren Hülse 5 verbunden, wodurch sicheine topfartige Gestalt ergibt. Der den Boden des Topfes bildende Verbindungsbereich 9 kann sich an der Oberfläche S des Verankerungsgrundes G abstützen und dient zugleich als Tiefenanschlag für die innere Hülse 5. Das Lastangriffsteil 3 ist zentrisch zur inneren Hülse 5 angeordnet und ragt entgegen der Setzrichtung axial vom Verbindungsbereich 9 ab. Auf diese Weise können Zug- und Querkräfte möglichst gleichmässig in den Verankerungsgrund G eingeleitet werden.

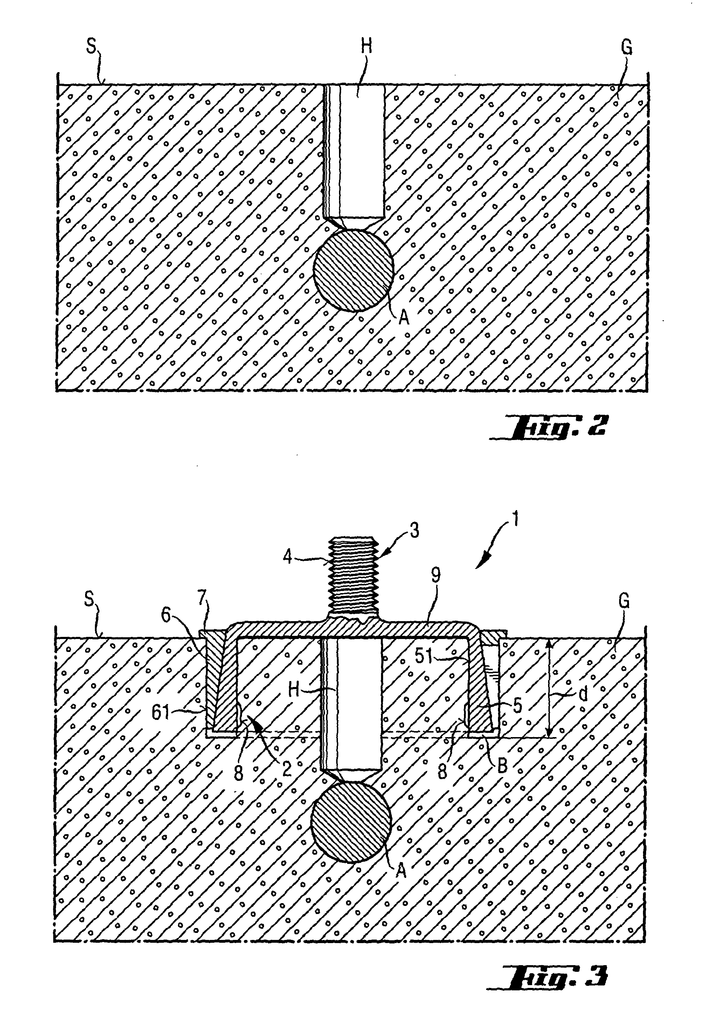

In Fig. 2 und 3 ist ein bevorzugtes Einsatzgebiet für die erfindungsgemässe Verankerungsvorrichtung angedeutet. Fig. 2 zeigt eine Aufnahmebohrung H für einen konventionellen Anker, bei welcher die Bohrung zu einem Treffer an einer im Verankerungsgrund G befindlichen Armierung A geführt hat. Da es in der Regel unerwünscht ist, Armierungen zu durchtrennen, muss in diesen Fällen der Befestigungspunkt verschoben werden und muss an anderer Stelle des Verankerungsgrundes eine neue Aufnahmebohrung erstellt werden. In einer Vielzahl von Fällen ist es aber nicht möglich, den Befestigungspunkt zu verschieben. Hier bietet die erfindungsgemässe Vorrichtung 1 Abhilfe, da sie eine zuverlässige Verankerung im oberflächennahen Bereich des Verankerungsgrundes G ermöglicht. Gemäss Fig. 3 wird dazu mit Hilfe einer Hammerbohrkrone oder mittels einer Kernbohrkrone eine ringförmige Schlitzbohrung B erstellt, welche koaxial zur Aufnahmebohrung H angeordnet ist. Die ringförmige Schlitzbohrung B wird nur bis in eine Tiefe vorgetrieben, in der mit Sicherheit. keine Armierungen zu finden sind. Typische Tiefen liegen zwischen etwa 1,5 cm und etwa 4 cm. Die erfindungsgemässe Vorrichtung 1 wird in die ringförmige Schlitzbohrung B eingesetzt und dort im oberflächennahen Bereich des Verankerungsgrundes G verankert. Auf diese Weise können auch Befestigungspunkte mit Armierungstreffem gerettet werden, ohne dabei die Armierung durchtrennen zu müssen.

Die erfindungsgemässe Vorrichtung erlaubt es, auch in Verankerungsgründen mit hoher Armierungsdichte an beliebigen Stellen Befestigungspunkte mit ausreichenden Haltewerten zu erstellen. Armierungstreffer bei der Erstellung von Aufnahmebohrungen für konventionelle Anker führen nicht dazu, dass der Befestigungspunkt verschoben oder die Armierung durchtrennt werden muss. Durch den Einsatz der erfindungsgemässen Vorrichtung können die gewünschten Befestigungspunkte auch bei Armierungstreffem noch gesetzt werden, ohne dass Armierungen durchtrennt werden müssten. Eine nachträgliche Verstärkung des Verankerungsgrundes ist daher nicht mehr erforderlich. Die Festigkeit des Verankerungsgrundes bleibt erhalten und die zulässige Belastung des Untergrundes muss nicht reduziert werden.

## Patentansprüche

1. Vorrichtung zur oberflächennahen Verankerung von Bauteilen in eine ringförmige Schlitzbohrung (B) eines, insbesondere armierten, Verankerungsgrund (G), mit einem im wesentlichen hohlzylindrischen, zur Aufnahme in die ringförmige Schlitzbohrung (B) ausgebildeten Verankerungsteil (2) und einem damit verbundenen Lastangriffsteil (3), **dadurch gekennzeichnet, dass** das Verankerungsteil (2) eine innere und eine äussere hohlzylindrische Hülse (5,6) umfasst, die ineinander schiebbar sind und aneinander angrenzende, zusammenwirkende Kegelflächen und von den Kegelflächen abgewandte Mantelflächen (51,61) aufweisen, die in Anlage zu den umlaufenden Begrenzungswandungen der ringförmigen Schlitzbohrung (B) kommen, wobei die innere Hülse (5) einen Aussendurchmesser (a) und die äussere Hülse (6) einen Innendurchmesser (i) aufweist, welche Durchmesser (a,i) sich jeweils zu den setzrichtungsseitig vorderen Enden der Hülsen (5,6) hin vergrössern, wenigstens eine der beiden Hülsen (5,6) mit axialen Schlitzen versehen ist, das Lastangriffsteil (3) am der Setzrichtung abgewandten Ende mit dem Mantel einer der beiden Hülsen (5,6) verbunden ist.

2. Vorrichtung nach Anspruch 1, **dadurch gekennzeichnet, dass** die innere und die äussere Hülse (5, 6) über ihre Länge jeweils Wandstärken aufweisen, welche sich im ineinandergeschobenen und gespreizten Zustand der beiden Hülsen (5, 6) derart ergänzen, dass das Verankerungsteil (2) über seine Länge eine im wesentlichen konstante Gesamtwandstärke (w) aufweist.

3. Vorrichtung nach Anspruch 1 oder 2, **dadurch gekennzeichnet, dass** die Innenwandung (51) der inneren Hülse (5) im Bereich ihres setzrichtungsseitig vorderen Endes mit radialen Vorsprüngen (8) versehen ist.

4. Vorrichtung nach Anspruch 3, **dadurch gekennzeichnet, dass** die radialen Vorsprünge (8) derart angeordnet sind, dass sie an der Innenwandung (51) der inneren Hülse (5) wenigstens einen umlaufenden Ringwulst mit Schneide bilden.

5. Vorrichtung nach einem der vorangehenden Ansprüche, **dadurch gekennzeichnet, dass** die äussere Hülse (6) an ihrem dem setzrichtungsseitig vorderen Ende gegenüberliegenden Ende mit einem umlaufenden Kragen (7) oder dergleichen Anschlagelementen ausgestattet ist.

6. Vorrichtung nach einem der vorangehenden Ansprüche, **dadurch gekennzeichnet, dass** das Lastangriffsteil (3) mit der inneren Hülse (5) verbunden ist.

7. Vorrichtung nach Anspruch 6, **dadurch gekennzeichnet, dass** die innere Hülse (5) und das Lastangriffsteil (3) über einen Verbindungsbereich (9) derart miteinander verbunden sind, **dass** sich eine topfartige Gestalt ergibt, wobei das Lastangriffsteil (3) zentrisch angeordnet ist und axial vom Verbindungsbereich (9) abragt.

8. Vorrichtung nach einem der vorangehenden Ansprüche, **dadurch gekennzeichnet, dass** die axialen Schlitze an der äusseren Hülse (6) vorgesehen sind.

9. Vorrichtung nach einem der vorangehenden Ansprüche, **dadurch gekennzeichnet, dass** der Verbindungsbereich (9) den vom Mantel umschlossenen Teil der Hülse (5,6) wenigstens bereichsweise überbrückt und einen Tiefenanschlag bildet.

## Claims

1. Device for anchoring assembly components near the surface in a circular slot bore (B) of an, in particular reinforced, anchorage base (G), comprising an essentially hollow cylindrical anchoring part (2) which is designed for accommodation in the circular slot bore (B) and a thereto linked load engaging part (3), **characterised in that** the anchoring part (2) includes an inner and an outer hollow cylindrical sleeve (5, 6) which can be pushed into each other and comprise adjacent and co-acting conical surfaces and casing surfaces (51, 61) which are facing away from the conical surfaces and abut the peripheral defining walls of the circular slot bore (B), and the inner sleeve (5) has an outside diameter (a) and the outer sleeve (6) an inside diameter (i), and these diameters (a, i) increase respectively towards the front end of the sleeves (5, 6), as seen in the setting direction, and at least one of the two sleeves (5, 6) is provided with axial slots, and the load engaging part (3) is at the end facing away from the setting direction connected to the casing of one of the two sleeves (5, 6).

2. Device according to Claim 1, **characterised in that** the inner and the outer sleeve (5, 6) have over their length respective wall thicknesses which complement each other in their inserted and expanded state of both sleeves (5, 6) in such a manner that the anchoring part (2) has over its length an essentially constant overall wall thickness (2).

3. Device according to Claim 1 or 2, **characterised in that** the inside wall (51) of the inner sleeve (5) is in the area of its front end, as seen in the setting direction, provided with radial protrusions (8).

4. Device according to Claim 3, **characterised in that** the radial protrusions (8) are arranged in such a manner that they form on the inside wall (51) of the inner sleeve (5) at least one peripheral annular bead with cutter.

5. Device according to one of the above claims, **characterised in that** the outer sleeve (5) is at its end opposite the front end, as seen in the setting direction, provided with a peripheral collar (7) or stop elements of this type.

6. Device according to one of the above claims, **characterised in that** the load engaging part (3) is connected to the inner sleeve (5).

7. Device according to Claim 6, **characterised in that** the inner sleeve (5) and the load engaging part (3) are connected via a connecting area (9) in such a manner that a troughlike shape results, and the load engaging part (3) is centrally arranged and protrudes axially from the connecting area (9).

8. Device according to one of the above claims, **characterised in that** the axial slots are provided on the outer sleeve (6).

9. Device according to one of the above claims, **characterised in that** the connecting area (9) at least partially bridges the portion of the sleeve (5, 6) which is encased by the casing and establishes a depth stop.

## Revendications

1. Dispositif pour l'ancrage en proximité de surface d'éléments structurels dans un trou en forme de fente annulaire (B) d'un support d'ancrage, en particulier armé, (G), avec une partie d'ancrage sensiblement en forme de cylindre creux (2), conçue pour être logée dans le trou en forme de fente annulaire (B), et avec une partie d'application de charge (3) reliée à la précédente, **caractérisé en ce que** la partie d'ancrage (2) comprend des manchons intérieur et extérieur en forme de cylindres creux (5, 6) qui peuvent coulisser l'un dans l'autre et comportent des surfaces coniques adjacentes l'une à l'autre et coopérant l'une avec l'autre et des surfaces périphériques (51, 61) qui sont situées à l'opposé des surfaces coniques et qui viennent en contact avec les parois périphériques de délimitation du trou en forme de fente annulaire (B), le manchon intérieur (5) possédant un diamètre extérieur (a) et le manchon extérieur (6) possédant un diamètre intérieur (i), lesquels diamètres (a,i) croissent respectivement en direction de l'extrémité des manchons (5, 6) située à l'avant par rapport au sens d'enfoncement, au moins un des deux manchons (5, 6) étant pourvu de fentes axiales, la partie d'application de charge (3) étant reliée à la surface périphérique de l'un des deux manchons (5, 6) au niveau de l'extrémité de celui-ci située à l'opposé du sens d'enfoncement.

2. Dispositif selon la revendication 1, **caractérisé en ce que** les manchons intérieur et extérieur (5, 6) présentent chacun, sur leur longueur, des épaisseurs de paroi qui, dans les positions emboîtée et déployée des deux manchons (5, 6), se complètent de façon que la partie d'ancrage (2) présente, sur sa longueur, une épaisseur totale de paroi sensiblement constante (w) .

3. Dispositif selon la revendication 1 ou 2, **caractérisé en ce que** la paroi intérieure (51) du manchon intérieur (5) est pourvue de saillies radiales (8) dans la zone de son extrémité située à l'avant par rapport au sens d'enfoncement.

4. Dispositif selon la revendication 3, **caractérisé en ce que** les saillies radiales (8) sont disposées de façon à former, sur la paroi intérieure (51) du manchon intérieur (5), au moins un bourrelet annulaire périphérique avec taillant.

5. Dispositif selon une des revendications précédentes, **caractérisé en ce que** le manchon extérieur (6) est muni, à son extrémité opposée à l'extrémité située à l'avant par rapport au sens d'enfoncement, d'un collet périphérique (7) ou d'éléments de butée analogues.

6. Dispositif selon une des revendications précédentes, **caractérisé en ce que** la partie d'application de charge (3) est reliée au manchon intérieur (5).

7. Dispositif selon la revendication 6, **caractérisé en ce que** le manchon intérieur (5) et la partie d'application de charge (3) sont reliés entre eux par l'intermédiaire d'une zone de liaison (9), de façon à créer une forme de pot, la partie d'application de charge (3) étant disposée de manière centrée et dépassant axialement de la zone de liaison (9).

8. Dispositif selon une des revendications précédentes, **caractérisé en ce que** les fentes axiales sont prévues dans le manchon extérieur (6).

9. Dispositif selon une des revendications précédentes, **caractérisé en ce que** la zone de liaison (9) recouvre au moins par endroits la partie du manchon (5, 6) entourée par la surface périphérique et forme une butée de profondeur.
